(19) **Europäisches Patentamt / European Patent Office / Office européen des brevets**

(11) **EP 1 667 103 B1**

(12) **EUROPEAN PATENT SPECIFICATION**

(45) Date of publication and mention of the grant of the patent:
**08.03.2017 Bulletin 2017/10**

(51) Int Cl.:
***G09G 3/34*** *(2006.01)*

(21) Application number: **05024230.4**

(22) Date of filing: **07.11.2005**

(54) **Methods and systems to control electronic display brightness**

Verfahren und Systeme zur Steuerung der Helligkeit elektronischer Anzeige vorrichtungen

Procédé et système pour régler la luminosité d'un afficheur électronique

(84) Designated Contracting States:
**DE GB**

(30) Priority: **03.12.2004 US 3774**

(43) Date of publication of application:
**07.06.2006 Bulletin 2006/23**

(73) Proprietor: **HEWLETT-PACKARD DEVELOPMENT COMPANY, L.P.**
**Houston, TX 77070 (US)**

(72) Inventor: **Fry, Walter G.**
**Houston**
**Texas 77070 (US)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
| | |
|---|---|
| **EP-A- 1 223 570** | **JP-A- H1 153 069** |
| **JP-A- H11 126 118** | **US-A- 5 786 801** |
| **US-A- 6 078 302** | **US-A1- 2004 085 276** |
| **US-A1- 2004 160 435** | **US-A1- 2004 263 496** |

## Description

BACKGROUND

In portable electronic devices (*e.g.*, laptop computers) configured to function using battery power, methods and systems that efficiently control power consumption are important. In particular, the power consumed by an electronic display may be significant. Therefore, methods and systems that decrease power consumption by electronic displays are desirable. Further, methods and systems that selectively combine different technologies to control power consumption by electronic displays are desirable.

EP 1 223 570 A2 discloses an LCD device usable in a portable computer. The LCD device has a controller coupled to a processor. The controller is coupled to an electronic display. The controller generates a duty rate signal in proportion to a calculated average gray level and controls the backlight brightness based on the duty rate signal.

US 2004/0160435 A1 discloses a power management circuit for a liquid crystal display, which controls the brightness of the display on the basis of an output signal of an ambient light sensor, on the basis of predetermined power consumption targets, as well as on the basis of the original image data.

US 2004/263496 A1 discloses a system for controlling brightness of a display on the basis of static and dynamic data. The system has a decoder which includes a first bank and a second bank. The first bank is supplied with dynamic control from a microcomputer via a data bus, and the second bank is supplied with static control data from the data bus via the data bus. The dynamic control data or the static control data is read from an address in the bank designated by an address signal. The dynamic control data read from the first bank and second bank is transferred to one of a plurality of registers designated by the address signal.

JP H11 53069 A discloses a method for controlling a back light of a liquid crystal display device, wherein a duty ratio of a driving signal supplied to the back light is varied and set according to a detected key input state and dependent on whether an infrared sensor detects presence of a user or not.

JP H11 126118 A discloses a method of controlling a back light of a portable device dependent on whether a processor is in a waiting state and dependent on the output of a sensor detecting luminosity around the portable device.

BRIEF DESCRIPTION OF THE DRAWINGS

For a detailed description of exemplary embodiments of the invention, reference will now be made to the accompanying drawings in which:

Figure 1 illustrates a system in accordance with embodiments of the invention;
Figures 2A and 2B illustrate pulse-width modulation ("PWM") interpreters in accordance with embodiments of the invention;
Figure 3 illustrates an electronic device in accordance with embodiments of the invention;
Figure 4 illustrates a method in accordance with embodiments of the invention;
Figure 5 illustrates another method in accordance with embodiments of the invention; and
Figure 6 illustrates another method in accordance with embodiments of the invention.

NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct electrical connection. Thus, if a first device couples to a second device, that connection may be through a direct electrical connection, or through an indirect electrical connection via other devices and connections. The term "system" refers to a collection of two or more parts and may be used to refer to a computer system or a portion of a computer system. The term "graphics" refers to text, images, or other information displayable by an electronic display.

DETAILED DESCRIPTION

As disclosed herein, embodiments of the invention control electronic display brightness. In some embodiments this is accomplished by selectively implementing control parameters associated with different technologies. In at least some embodiments, two or more controllers are implemented. The first controller (e.g., a graphics controller) is configured to output a first control signal based on a first technology (e.g., a technology that controls display brightness based on graphics shown or graphics to be shown on an electronic display). The second controller is configured to receive and interpret the first control signal as well as control signals associated with other technologies. Each interpreted control signal is associated with a unique control parameter. The second controller selectively combines the effect of the control parameters to provide a signal that efficiently controls electronic display brightness.

A user or manufacturer may choose not to employ hardware/software or licenses necessary to implement a particular technology. Additionally, a technology may not be compatible with some embodiments. In some embodiments, if the second controller determines that the first controller is not present or is otherwise not providing a valid first control signal, the second controller is configured to automatically control electronic display brightness based on one or more of the other control signals. Therefore, some embodiments of the invention enable interpretation and combination of electronic display control signals to permit efficient power consumption by an electronic display. The control signals may be generated by controllers that operate independently of each other. Some embodiments of the invention also enable redundancy and improved efficiency in an environment in which compatibility problems may exist or may change over time.

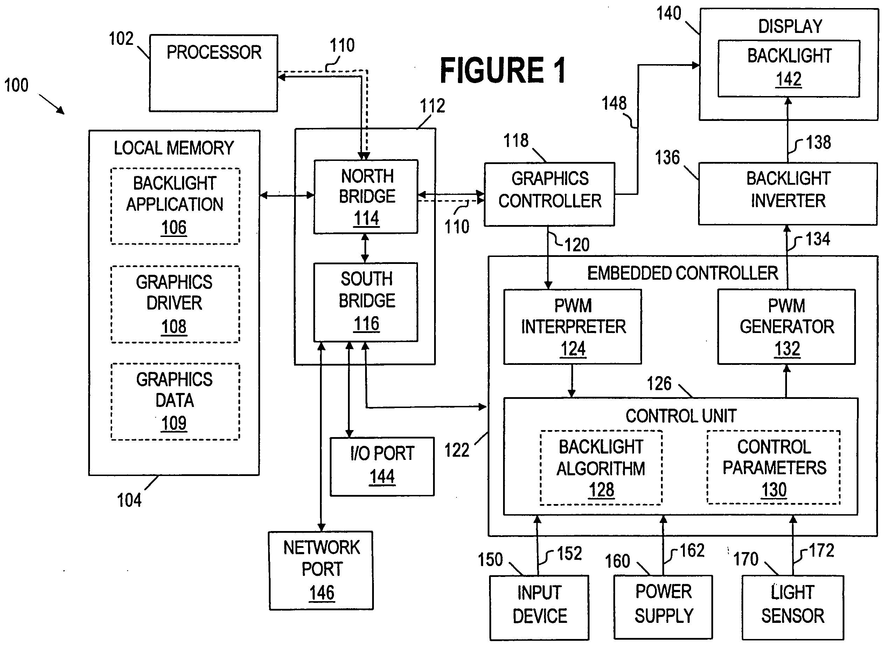

Figure 1 illustrates a system 100 in accordance with embodiments of the invention. As shown in Figure 1, the system 100 comprises a processor 102 coupled to a graphics controller 118 and a local memory 104 via a chipset 112. The chipset 112 comprises a north bridge 114 and a south bridge 116 that control data to be transmitted between the processor 102, the local memory 104 and the graphics controller 118. In some embodiments, the graphics controller 118 and the chipset 112 may be combined as a single unit. The processor 102 executes computer-readable instructions stored in the local memory 104 or other storage mediums accessible to the processor 102. For example, other storage mediums may couple to the input/output ("I/O") port 144 or to the network port 146 and provide computer-readable instructions to the processor 102 via the chipset 112.

To decrease power consumption of a display 140 illuminated, for example, by a backlight 142, the system 100 implements two controllers. The first controller is the graphics controller 118 which outputs a first control signal 120 based on graphics shown or graphics to be shown on the display 140. In at least some embodiments, the first control signal 120 is generated when the processor 102 executes a backlight application 106 and a graphics driver 108 stored in the local memory 106. Alternatively, the graphics controller 118 may execute the backlight application 106 and the graphics driver 108, thereby freeing the processor 102 to perform other tasks.

The graphics driver 108, when executed, enables the processor 102 (or the graphics controller 118) to access graphics data 109 stored in the local memory 104 and convert the graphics data 109 to a signal 148 that produces an image on the display 140. Although the graphics data 109 is described as being stored in the local memory 104, the graphics data 109 may alternatively be stored in a memory (not specifically shown) of the graphics controller 118. The graphics data 109 may be generated, for example, when the processor 102 executes or installs one or more software applications.

The backlight application 106, when executed, causes the processor 102 to examine the graphics data 109. For example, examining the graphics data 109 enables the processor 102 to determine the position/quantity of light pixels, the position/quantity of dark pixels, or an average grayscale of pixels. In response to examining the graphics data 109, the processor 102 asserts a signal 110 that causes the graphics controller 118 to output a control signal 120 capable of dynamically controlling electronic display brightness based on the graphics data 109. Alternatively, the graphics controller 118 may be configured to execute the backlight application 106 and to generate the first control signal 120 without the processor 102 nor the signal 110, thereby freeing the processor 102 to perform other tasks.

The first control signal 120 may be a pulse-width modulation (PWM) signal interpretable by a backlight inverter 136. Rather than provide the first control signal 120 directly to the backlight inverter 136, the graphics controller 118 couples to and outputs the first control signal 120 to a second controller, for example, an embedded controller 122.

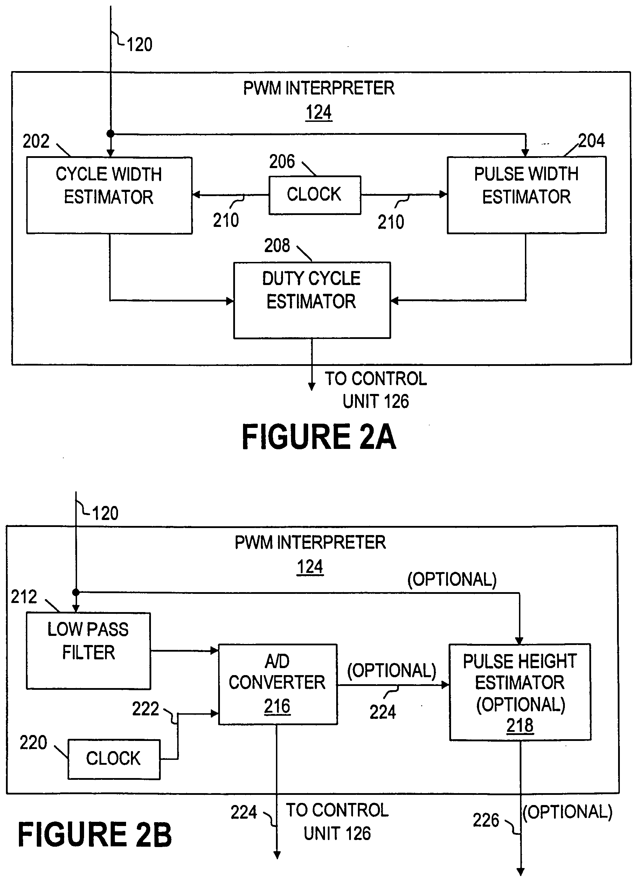

As shown in Figure 1, the embedded controller 122 comprises a PWM interpreter 124 coupled to a control unit 126. The PWM interpreter 124 receives the first control signal 120 from the graphics controller 118 and interprets the first control signal 120. Figure 2A illustrates a PWM interpreter 124 in accordance with various embodiments of the invention. As shown in Figure 2A, the PWM interpreter 124 comprises a cycle-width estimator 202 and a pulse-width estimator 204 that receive the first control signal 120. The PWM interpreter 124 also comprises a clock generator 206 coupled to the cycle width-estimator 202 and the pulse-width estimator 204. The clock generator 206 provides a clock signal 210 whose cycle is shorter than either the pulse width or the modulation cycle-width to be estimated. By shortening the cycle of the clock signal 210 with respect to the pulse-width or cycle-width, the resolution of the pulse-width estimation and the modulation cycle-width estimation is increased.

The cycle-width estimator 202 estimates the duration of a pulse-width modulation cycle by counting a number of clock cycles (of the clock signal 210) between subsequent rising edges of the first control signal 120. The pulse-width estimator 204 estimates the duration of a pulse by counting a number of clock cycles (of the clock signal 210) between rising edges and subsequent falling edges (*i.e.*, between each pulse) of the first control signal 120. The duty-cycle estimator 208 receives a clock count from each of the cycle-width estimator 202 and the pulse-width estimator 204 and outputs a signal that indicates the estimated duty-cycle. For example, if the clock count from the cycle-width estimator 202 is 40 and the clock count from the pulse-width estimator 204 is 30, the duty-cycle estimator 208 outputs a signal that indicates the duty-cycle is 75% (*i.e.*, the pulse is "on" or "high" for 75% of each modulated cycle).

In alternative embodiments, the cycle-width estimator 202 may simply estimate the "low-pulse" duration (*i.e.*, when the pulse is "off' or "low") rather than the entire modulated cycle duration. For example, the low-pulse duration may be estimated by counting a number of clock cycles (of the clock signal 210) between falling edges and subsequent rising edges (*i.e.*, between each low pulse) of the first control signal 120. In such embodiments, the duty-cycle estimator 208 compares the clock count from the pulse-width estimator 204 with the clock count of the low-pulse duration and outputs a signal that indicates the estimated duty-cycle. For example, if the clock count from the pulse-width estimator 202 is 20 and the clock count of the low-pulse duration is 20, the duty-cycle estimator 208 may output a signal that indicates the duty-cycle is 50% (*i.e.*, the pulse is "on" or "high" for one-half or 50% of each modulated cycle).

Figure 2B illustrates another PWM interpreter 124 in accordance with embodiments of the invention. As shown in Figure 2B, the PWM interpreter 124 comprises a low-pass filter 212 coupled to an analog-to-digital (A/D) converter 216. The first control signal 120 is input to the low-pass filter 212 and optionally input to a pulse-height estimator 218. The low-pass filter 212 outputs an average or "mean" voltage associated with the first control signal 120 over a predetermined time period. The predetermined time period may be a sampling rate at which the A/D converter 216 samples the output of the low-pass filter 212. For example, a clock signal 222 provided by a clock generator 220 may be input to the A/D converter 214 to control the sampling rate. If the sampling rate is approximately equal to the modulation cycle-width, the output voltage 224 of the A/D converter 216 indicates the duty-cycle of the first control signal 120 (*e.g.*, an output voltage 224 of 3V indicates a duty cycle of 75% when the "on" or "high" voltage associated with pulses of the first control signal 120 is known to be 4V). Therefore, in some embodiments, the control unit 126 of the embedded controller 122 shown in Figure 1 associates the output voltage 224 with a duty-cycle.

Optionally, if the "on" or "high" voltage associated with pulses of the first control signal 120 is not known, the pulse-height estimator 218 shown in Figure 2B approximates the magnitude of the "high" voltage. The pulse-height estimator 218 also may compare the filtered output voltage 224 with the "high" voltage and output a signal 226 that indicates the duty-cycle (*e.g.*, if the output voltage 224 is 2V and the "high" voltage is determined to be 4V, the signal 226 may indicate a duty cycle of 50%).

Returning to Figure 1, the control unit 126 receives the output from the PWM interpreter 124. As shown, the control unit 126 comprises a backlight algorithm 128 and control parameters 130. At least one control parameter 130 may be based on the control signal 120 interpreted by the PWM interpreter 124. Additionally, other control parameters 130 may be based on a signal 152 from an input device 150 (*e.g.*, a keyboard, mouse, or buttons on a display), a signal 162 from a power supply 160, or a signal 172 from a light sensor 170 (*e.g.*, an ambient light sensor). For example, the signal 152 indicates when a user selects (via the input device 150) to change the brightness of the display 140. The signal 162 indicates when the system 100 is disconnected from an alternating current ("AC") power supply or other external power supply. Additionally or alternatively, the signal 162 may indicate when less than one or more thresholds of battery power remains. The signal 172 indicates an amount of ambient light that surrounds the display 140. In some embodiments, one or more of the signals 120, 152, 162, 172 may include a "signature" that indicates a source of the signal and/or a health of the device providing the signal.

In the exemplary embodiment of Figure 1, the embedded controller 122 is shown receiving the signals 120, 152, 162, 172. However, other embodiments may implement additional signals or fewer signals depending on the technology (*e.g.*, hardware/software) that is available for a particular system. For example, the hardware/software needed to create the signals 120, 152, 162, 172 may not be implemented in some embodiments or may not be functioning properly. Thus, the embedded controller 122 is configured to determine the existence of the signals 120, 152, 162, 172 and the validity of the signals 120, 152, 162, 172. For example, if the control unit 126 does not receive a particular signal (*e.g.*, if a voltage level associated with the PWM interpreter 124 output or associated with one of the signals 152, 162, 172 is less than a threshold level), the control unit 126 may automatically determine that the particular signal does not exist or is not available.

Additionally or alternatively, the embedded controller 122 may be configured to receive hardware/software inventory information (*e.g.*, information that indicates whether certain hardware/software has been installed in the system 100) that indicates whether a given signal does or should exist. If the embedded controller 122 does not receive a given signal that should exist, an alert or message may be generated to notify a user of the problem. Likewise, if the embedded controller 122 receives the given signal (*e.g.*, the voltage level associated with the signal is equal to or greater than a threshold level), but the frequency and/or the magnitude of the given signal does not fall within a predetermined "valid" threshold associated with the given signal, the embedded controller 122 may automatically identify the given signal as invalid. Upon identifying an invalid signal, the embedded controller 122 may generate an alert or message to notify a user of the problem. In some embodiments, a value associated with a given control parameter changes based on whether a signal associated with the given control parameter exists (or is available) and whether the signal is valid. Thus, the control parameters 130 can be used to identify whether a signal (*e.g.*, signal 120, 152, 162, 172) exists and whether a signal is valid.

In some embodiments, the backlight algorithm 128 implements the control parameters 130 and outputs a signal that takes some or all of the control parameters 130 into account. For example, the backlight algorithm 128 may differently weight each of the control parameters 130. Additionally or alternatively, the control parameters 130 may be prioritized according to a predetermined prioritization that minimizes power consumption by the backlight 142 in a variety of situations encompassed (*i.e.*, describable) by the control parameters 142. In some embodiments, a user can adjust the effect of the control parameters 130 on the backlight algorithm 128.

As an example, the backlight illumination provided by the backlight algorithm 128 is generally described the equation (1) shown below:

$$\text{Backlight illumination} = F(CP_1, CP_2, CP_3, CP_4); \qquad (1)$$

In equation 1, the backlight illumination is a function (F) of the control parameters 130 ($CP_1$, $CP_2$, $CP_3$, $CP_4$). $CP_1$ is a numeric value associated with the first control signal 120, $CP_2$ is a numeric value associated with the signal 152, $CP_3$ is a numeric value associated with the signal 162 and $CP_4$ is a numeric value associated with the signal 172. The numeric value associated with each control parameter 130 may be unique and may be based on a range of possible values provided by the signals 120, 152, 162 and 172.

An example of the function, $F(CP_1, CP_2, CP_3, CP_4)$, is described in the equation (2) shown below:

$$\text{Backlight illumination} = \alpha*CP_1 + \beta*CP_2 + \lambda*CP_3 + \varsigma*CP_4 \qquad (2)$$

In equation 2, each control parameter 130 ($CP_1$, $CP_2$, $CP_3$, $CP_4$) is multiplied by a variable ($\alpha$, $\beta$, $\lambda$, and $\zeta$) and the results added together. Each variable may be set or reset to a default value when the system 100 is "powered up." The default values may be predetermined to minimize power consumption by a backlight 142 and may be adjustable by a user. In some embodiments, the value affixed to each variable may be adjusted within a range (*e.g.*, -1.00 to 1.00 or 0.00 to 1.00) assigned to each variable. Each variable may be automatically adjusted based on the validity of each control parameter 130.

Sometimes the validity (utility) of one or more of the control parameters 130 may be affected by a manufacturer or a user of the system 100. Additionally, one or more components (*e.g.*, the graphics controller 118, the local memory 104, the PWM interpreter 124, the input device 150, the power supply 160, the light sensor 170) of the system 100 that affect the control parameters 130 may be temporarily or permanently disabled. Therefore, embodiments of the invention enable the ability to adjust, ignore or disable one or more of the control parameters 130 while permitting uninterrupted backlight control based on remaining control parameters 130, thus, providing a wide variety of desirable functions.

For example, if one or more of the backlight application 106, the graphics driver 108 or the graphics controller 118 is not functioning (*e.g.*, due to a fault, incompatibility or exclusion from the system 100), the first control signal 120 and, consequently, the control parameter 130 ($CP_1$) based on the first control signal 120 is likely to be invalid or nonexistent. Therefore, the control unit 126 of the embedded controller 122 is configured to detect when the first control signal 120 (or the output from the PWM interpreter 124) is invalid or does not exist and cause the variable associated with $CP_1$ (in the above example, "$\alpha$") to equal zero. The control unit 126 may accordingly adjust the weights of the remaining control parameters 130.

The control unit 126 also may be configured to detect whether one or more of the other signals 152, 162 and 172 are invalid or nonexistent. If any of these signals is determined to be invalid, the control unit 126 may "zero out" or nullify the variable associated the consequently invalid control parameter 130 and cause the backlight algorithm 128 to continue functioning using the remaining control parameters 130.

In at least some embodiments, the function (F) of the backlight algorithm 128 allows continuous control of electronic display brightness, even when one or more components that affect the control parameters 130 stops functioning or is faulty (or not detected) when the system 100 "powers up." Additionally, the control unit 126 may be configured to automatically activate the use of a control parameter 130 when a determination is made that a signal (*e.g.*, the first control signal 120, the signal 152, the signal 162 or the signal 172) associated with the respective control parameter 130 is valid. Therefore, when a manufacturer or user installs (or repairs) the hardware, software, or licenses necessary to provide a valid control signal, the control unit 126 activates (or re-activates) a corresponding control parameter 130 of the backlight algorithm 128.

The control unit 126 outputs a signal to the PWM generator 132 based on the backlight algorithm 128 and the control parameters 130. The PWM generator 132 then outputs a corresponding PWM signal 134 to the backlight inverter 136. The backlight inverter 136 converts the PWM signal 134 to a signal 138 compatible with the backlight 142. The signal 138 causes the backlight 142 to emit light at an intensity determined by the PWM signal 134.

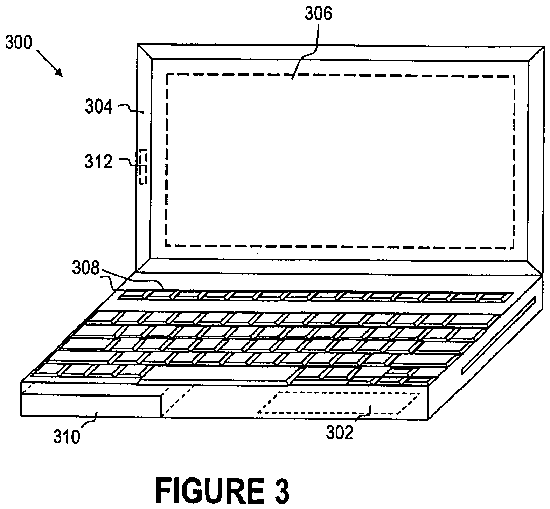

Figure 3 illustrates an electronic device 300 in accordance with embodiments of the invention. As shown in Figure 3, the electronic device 300 is a laptop computer having a display 304. However, embodiments of the invention are not limited to laptop computers and may comprise any electronic device with a display. The electronic device 300 comprises a battery 310 that provides power when the device 300 is not electrically connected to an AC power supply or other external power supply. The electronic device 300 also comprises a backlight 306 that illuminates the display 304 as well as an ambient light sensor 312 and buttons (or keys) 312 that permit a user to control one or more functions of the electronic device 300.

In order to control an amount of illumination provided by the backlight 306, the electronic device 300 implements the components previously described in Figure 1. At least some of the components described in Figure 1 (*e.g.*, the processor 102, the local memory 104, the chipset 112, the graphics controller 118 and the embedded controller 122) may be implemented internally and coupled together using a printed circuit (PC) board 302.

For example, an embedded controller (*e.g.*, a keyboard controller or a power supply controller) as described for Figure 1 may be affixed to the PC board 302 and configured to receive control signals from the battery 310, one or more buttons 308, the ambient light sensor 312 or a graphics controller. By interpreting the control signals or a parameter associated with the control signals, the embedded controller outputs a backlight control signal (*e.g.*, a PWM signal) that determines the brightness of the backlight 306. If any of the control signals are not provided (*e.g.*, due to malfunction of components, incompatibility, decisions made by a manufacturer or a user), the embedded controller provides the backlight control signal based on the other control signals. In at least some embodiments, the embedded controller implements an algorithm (*e.g.*, by default) calculated to minimize power consumption by the backlight 306 (or at least decrease power consumption) by combining the effect of the different control signals.

For example, controlling the backlight 306 based on graphics, ambient light and power remaining in the battery 310 provides improved efficiency compared to implementing any of the techniques individually. In some embodiments, the backlight 306 is controlled automatically (*e.g.*, based on graphic content, an amount of ambient light, and remaining battery power), while also permitting a user some degree of control. Additionally, the backlight control signal may be configured to adjust the backlight brightness slowly (*e.g.*, over a time period such as 5 minutes) such that a user does not notice (at least the likelihood that a user notices is decreased) when the backlight brightness is changing.

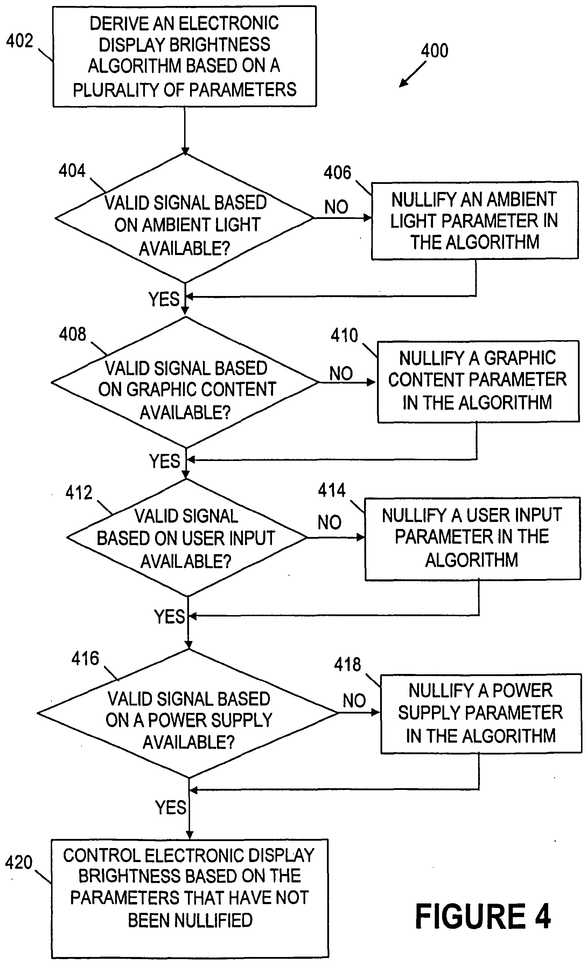

Figure 4 illustrates a method 400 in accordance with embodiments of the invention. As shown in Figure 4, the method 400 begins by deriving an electronic display brightness algorithm based on a plurality of parameters (block 402). The parameters may be independent or substantially independent such that electronic display brightness could be controlled using any one of the parameters. At block 404, a determination is made whether a valid signal based on ambient light is available. If a valid signal based on ambient light is not available, an ambient light parameter of the algorithm is nullified (block 406). At block 408, a determination is made whether a valid signal based on graphic content is available. If a valid signal based on graphic content is not available, a graphic content parameter of the algorithm may be nullified (block 410).

At block 412, a determination is made whether a valid signal based on user input is available. If a valid signal based on user input is not available, a user input parameter of the algorithm is nullified (block 414). At block 414, a determination is made whether a valid signal based on a power supply is available. If a valid signal based on user input is not available, a power supply parameters of the algorithm is nullified (block 416). At block 420, electronic display brightness may be controlled based on the parameters that have not been nullified.

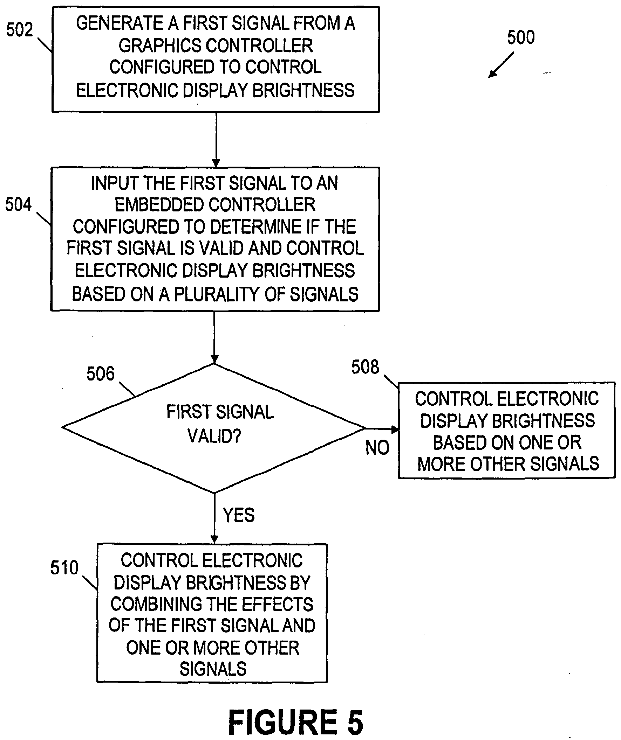

Figure 5 illustrates another method 500 in accordance with embodiments of the invention. As shown in Figure 5, the method 500 comprises generating a first control signal from a graphics controller configured to control electronic display brightness (block 502). At block 504, the first control signal is input to an embedded controller configured to determine if the first control signal is valid and to control electronic display brightness based on a plurality of control signals. If a determination is made (at block 506) that the first control signal is not valid, the electronic display brightness is controlled based on one or more other control signals (block 508). If a determination is made (at block 506) that the first control signal is valid, the electronic display brightness is controlled by combining the effect of the first control signal with the effect of one or more other control signals (block 510). Thus, power consumption by an electronic display may be decreased.

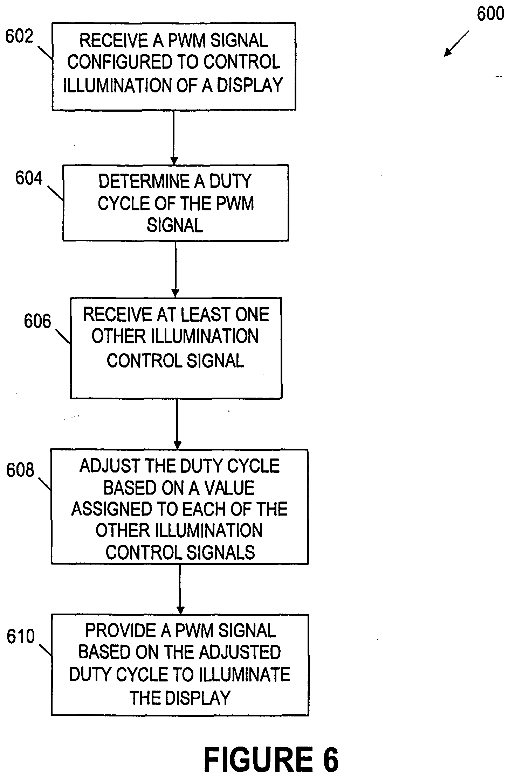

Figure 6 illustrates another method 600 in accordance with embodiments of the invention. As shown in Figure 6, the method 600 comprises receiving a PWM signal configured to control illumination of a display (block 602). At block 604, a duty cycle of the PWM signal is determined. At block 606, at least one other illumination control signal is received. The method 600 adjusts the duty cycle based on a value assigned to each of the other illumination control signals (block 608). The values assigned to the other illumination control signals may weight the importance of the PWM signal and the other illumination control signals with respect to each other. In some embodiments, the PWM signal and the other illumination control signals are weighted equally. Alternatively, the weighting may enable decreased power consumption by a display and/or may reflect user preferences. At block 610, a PWM signal based on the adjusted duty cycle is provided to illuminate the display.

The above discussion is meant to be illustrative of the principles and various embodiments of the present invention. Numerous variations and modifications will become apparent to those skilled in the art once the above disclosure is fully appreciated. For example, Figures 4-6 represent exemplary embodiments only. Thus, one or more of the functional blocks shown in Figure 4 may be combined, performed simultaneously, performed in a different order and/or omitted. Likewise, one or more of the functional blocks of Figure 5 or Figure 6 may be combined, performed simultaneously, performed in a different order and/or omitted. It is intended that the following claims be interpreted to embrace all such variations and modifications.

## Claims

1. A controller (122), comprising:

   an interpreter unit (124) configured to receive a provisional control signal (120) for controlling a backlight (142) and to estimate an attribute of the provisional control signal (120), said provisional control signal being generated by a graphics controller, wherein the provisional control signal (120) received by the interpreter (124) comprises a pulse width modulated signal and the attribute comprises a duty cycle of the pulse width modulated signal;
   a control unit (126) configured to receive an input signal from the interpreter unit (124) based on the attribute and to receive additional input signals (162,172) that are associated with at least one of a power supply coupled to the controller and an ambient light sensor coupled to the controller (122), the control unit (126) automatically performs an analysis of the input signals to selectively decrease power consumption by the backlight (142); and
   a generator unit (132) coupled to the control unit (126) and configured to generate a final control signal (134) to control the backlight (142) based on the analysis.

2. The controller of claim 1 wherein the provisional control signal (120) received by the interpreter (124) is generated based on an analysis of graphics data shown or graphics data to be shown on an electronic display (140).

## Patentansprüche

1. Steuervorrichtung (122), Folgendes umfassend:

   eine Interpretereinheit (124), konfiguriert, ein vorläufiges Steuersignal (120) zum Steuern einer Hintergrundbeleuchtung (142) zu empfangen und ein Attribut des vorläufigen Steuersignals (120) abzuschätzen, wobei das vorläufige Steuersignal durch einen Grafikcontroller erzeugt wird, wobei das von dem Interpreter (124) empfangene vorläufige Steuersignal (120) ein pulsbreitenmoduliertes Signal umfasst und das Attribut ein Tastverhältnis des pulsbreitenmodulierten Signals umfasst;
   eine Steuereinheit (126), konfiguriert, auf der Grundlage des Attributs ein Eingabesignal von der Interpretereinheit (124) zu empfangen und zusätzliche Eingabesignale (162, 172) zu empfangen, die mit einer mit der Steuervorrichtung gekoppelten Energieversorgung und/oder mit einem mit der Steuervorrichtung (122) gekoppelten Umgebungslichtsensor verknüpft sind, wobei die Steuereinheit (126) automatisch eine Analyse der Eingabesignale durchführt, um selektiv einen Energieverbrauch der Hintergrundbeleuchtung (142) zu verringern; und
   eine Generatoreinheit (132), gekoppelt mit der Steuereinheit (126) und konfiguriert, auf der Grundlage der Analyse ein abschließendes Steuersignal (134) zum Steuern der Hintergrundbeleuchtung (142) zu erzeugen.

2. Steuervorrichtung nach Anspruch 1, wobei das von dem Interpreter (124) empfangene vorläufige Steuersignal (120) auf der Grundlage einer Analyse von auf einer elektronischen Anzeige (140) dargestellten Grafikdaten oder darzustellenden Grafikdaten erzeugt wird.

## Revendications

1. Contrôleur (122) comprenant :

   une unité d'interprétation (124) configurée pour recevoir un signal de commande provisoire (120) pour commander un rétroéclairage (142) et
   estimer un attribut du signal de commande provisoire (120), ledit signal de commande provisoire
   étant généré par un contrôleur graphique, dans lequel le signal de commande provisoire (120) reçu par l'interprète (124) comprend un signal modulé en largeur d'impulsion et l'attribut comprend un cycle de service du signal modulé en largeur d'impulsion ;
une unité de commande (126) configurée pour recevoir un signal d'entrée de l'unité d'interprétation (124) sur la base de l'attribut et pour recevoir d'autres signaux d'entrée (162, 172) qui sont associés avec une alimentation électrique couplée au contrôleur et/ou un capteur de lumière ambiante couplé au contrôleur (122) ; l'unité de commande (126) réalise automatiquement une analyse des signaux d'entrée pour réduire de manière sélective la consommation d'électricité par le rétroéclairage (142) ; et
une unité de génération (132) couplée à l'unité de commande (126) et configurée pour générer un signal de commande final (134) afin de commander le rétroéclairage (142) sur la base de l'analyse.

2. Contrôleur selon la revendication 1 dans lequel le signal de commande provisoire (120) reçu par l'interprète (124) est généré sur la base d'une analyse des données graphiques présentées ou des données graphiques à présenter sur un affichage électronique (140).

**FIGURE 1**

100

102 PROCESSOR

110

LOCAL MEMORY 104

BACKLIGHT APPLICATION 106

GRAPHICS DRIVER 108

GRAPHICS DATA 109

112

NORTH BRIDGE 114

110

SOUTH BRIDGE 116

I/O PORT 144

122

NETWORK PORT 146

118 GRAPHICS CONTROLLER

148

120

EMBEDDED CONTROLLER

PWM INTERPRETER 124

126 CONTROL UNIT

BACKLIGHT ALGORITHM 128

CONTROL PARAMETERS 130

150 152 INPUT DEVICE

160 162 POWER SUPPLY

170 172 LIGHT SENSOR

PWM GENERATOR 132

134

136 BACKLIGHT INVERTER

138

140 DISPLAY

BACKLIGHT 142

EP 1 667 103 B1

120

PWM INTERPRETER
124

202
CYCLE WIDTH
ESTIMATOR

206
CLOCK

204
PULSE WIDTH
ESTIMATOR

210

210

208
DUTY CYCLE
ESTIMATOR

TO CONTROL
UNIT 126

## FIGURE 2A

120

PWM INTERPRETER
124

(OPTIONAL)

212
LOW PASS
FILTER

A/D
CONVERTER
216

(OPTIONAL)

224

PULSE HEIGHT
ESTIMATOR
(OPTIONAL)
218

222

220
CLOCK

224   TO CONTROL
UNIT 126

226   (OPTIONAL)

## FIGURE 2B

**FIGURE 3**

402 — DERIVE AN ELECTRONIC DISPLAY BRIGHTNESS ALGORITHM BASED ON A PLURALITY OF PARAMETERS

400

404 VALID SIGNAL BASED ON AMBIENT LIGHT AVAILABLE? — NO → 406 NULLIFY AN AMBIENT LIGHT PARAMETER IN THE ALGORITHM

YES

408 VALID SIGNAL BASED ON GRAPHIC CONTENT AVAILABLE? — NO → 410 NULLIFY A GRAPHIC CONTENT PARAMETER IN THE ALGORITHM

YES

412 VALID SIGNAL BASED ON USER INPUT AVAILABLE? — NO → 414 NULLIFY A USER INPUT PARAMETER IN THE ALGORITHM

YES

416 VALID SIGNAL BASED ON A POWER SUPPLY AVAILABLE? — NO → 418 NULLIFY A POWER SUPPLY PARAMETER IN THE ALGORITHM

YES

420 — CONTROL ELECTRONIC DISPLAY BRIGHTNESS BASED ON THE PARAMETERS THAT HAVE NOT BEEN NULLIFIED

FIGURE 4

**502** GENERATE A FIRST SIGNAL FROM A GRAPHICS CONTROLLER CONFIGURED TO CONTROL ELECTRONIC DISPLAY BRIGHTNESS

**500**

**504** INPUT THE FIRST SIGNAL TO AN EMBEDDED CONTROLLER CONFIGURED TO DETERMINE IF THE FIRST SIGNAL IS VALID AND CONTROL ELECTRONIC DISPLAY BRIGHTNESS BASED ON A PLURALITY OF SIGNALS

**506** FIRST SIGNAL VALID?

**508** CONTROL ELECTRONIC DISPLAY BRIGHTNESS BASED ON ONE OR MORE OTHER SIGNALS

NO

YES

**510** CONTROL ELECTRONIC DISPLAY BRIGHTNESS BY COMBINING THE EFFECTS OF THE FIRST SIGNAL AND ONE OR MORE OTHER SIGNALS

**FIGURE 5**

600

| 602 | RECEIVE A PWM SIGNAL CONFIGURED TO CONTROL ILLUMINATION OF A DISPLAY |

↓

| 604 | DETERMINE A DUTY CYCLE OF THE PWM SIGNAL |

↓

| 606 | RECEIVE AT LEAST ONE OTHER ILLUMINATION CONTROL SIGNAL |

↓

| 608 | ADJUST THE DUTY CYCLE BASED ON A VALUE ASSIGNED TO EACH OF THE OTHER ILLUMINATION CONTROL SIGNALS |

↓

| 610 | PROVIDE A PWM SIGNAL BASED ON THE ADJUSTED DUTY CYCLE TO ILLUMINATE THE DISPLAY |

# FIGURE 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1223570 A2
- US 20040160435 A1
- US 2004263496 A1
- JP H1153069 A
- JP H11126118 A